(19) 

Europäisches
Patentamt
European
Patent Office
Office européen
des brevets

(11)     **EP 4 462 157 A1**

(12)                          **EUROPEAN PATENT APPLICATION**
                                published in accordance with Art. 153(4) EPC

(43) Date of publication:
  **13.11.2024  Bulletin 2024/46**

(21) Application number: **22902728.9**

(22) Date of filing: **17.05.2022**

(51) International Patent Classification (IPC):
  **G01S 7/497** *(2006.01)*

(52) Cooperative Patent Classification (CPC):
  **G01S 7/497**

(86) International application number:
  **PCT/CN2022/093363**

(87) International publication number:
  **WO 2023/103290 (15.06.2023 Gazette 2023/24)**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**
  Designated Validation States:
  **KH MA MD TN**

(30) Priority:  **09.12.2021  CN 202111503346**

(71) Applicant: **Hesai Technology Co., Ltd.**
  **Shanghai 201821 (CN)**

(72) Inventors:
  • **XIAO, Pengchuan**
    **Shanghai 201821 (CN)**

  • **SHAO, Zhenlei**
    **Shanghai 201821 (CN)**
  • **LV, Chengsheng**
    **Shanghai 201821 (CN)**
  • **LIAO, Ren**
    **Shanghai 201821 (CN)**
  • **CHAI, Xiaolin**
    **Shanghai 201821 (CN)**
  • **XIANG, Shaoqing**
    **Shanghai 201821 (CN)**

(74) Representative: **Alatis**
  **3, rue Paul Escudier**
  **75009 Paris (FR)**

(54) **CALIBRATION METHOD, CALIBRATION DEVICE, CALIBRATION SYSTEM AND READABLE STORAGE MEDIUM**

(57)     A calibration method, a calibration device (M10), a calibration system, and a readable storage medium, the calibration method comprises: receiving a point cloud determined by a LiDAR (LS1) from a field of view, the point cloud being in a LiDAR coordinate system (S11); receiving a set of survey points determined from the field of view by a survey device (CH1), the set of survey points being in a survey coordinate system (S12); based on the point cloud and the set of survey points, determining a first transformation parameter between the LiDAR coordinate system and the survey coordinate system (S13); based on the first transformation parameter and the position and orientation information of the vehicle (CA1) in the survey coordinate system (S14), determining a calibration parameter (S14) between the LiDAR coordinate system and the vehicle coordinate system of the vehicle (CA1). Both the calibration efficiency and the calibration precision can be improved, and batch calibration is facilitated.

FIG. 1

## Description

## TECHNICAL FIELD

This disclosure relates to the field of autonomous driving and, in particular, to calibration methods, calibrator devices, calibration systems, and readable storage media.

## BACKGROUND

In the current field of autonomous driving, vehicles are typically loaded with a variety of data collector devices, such as LiDAR, camera, or the like. The various data collector devices use different coordinate systems, resulting in a failure to use data collected by multiple data collector devices in conjunction with each other. In this case, data collected by different data collector devices typically need to be transformed to a specified coordinate system and the data are processed and analyzed in the same coordinate system.

To realize transformation between coordinate systems, the relative position and orientation relationship between coordinate systems in which the data collector devices are located and the specified coordinate system needs to be determined. This process of determining the relative position and orientation relationship can be referred to as calibration, and the data configured to characterize the relative position and orientation relationship between the coordinate system for the data collector device and the specified coordinate system can be referred to as transformation parameters.

However, the existing LiDAR calibration processes need to spend a lot of time in controlling the calibration precision, which reduces the calibration efficiency of the existing LiDAR calibration schemes. Moreover, due to the low calibration efficiency, the existing LiDAR calibration schemes cannot meet the needs of batch calibration, and even if the batch calibration is performed, the batch calibration needs to consume a lot of time.

## SUMMARY

In view of this, this disclosure provides a calibration method, a calibrator device, a calibration system, and a readable storage medium, which can improve the calibration efficiency and the calibration precision, thereby facilitating batch calibration.

In particular, this disclosure provides a calibration method for determining a relative position and orientation relationship between a LiDAR and a vehicle; the method including:

receiving a point cloud determined by the LiDAR from a field of view, the point cloud being in a LiDAR coordinate system;
receiving a set of survey points determined by a survey device from the field of view, the set of survey points being in a survey coordinate system;
determining a first transformation parameter between the LiDAR coordinate system and the survey coordinate system based on the point cloud and the set of survey points; and
determining a calibration parameter between the LiDAR coordinate system and a vehicle coordinate system for the vehicle based on the first transformation parameter and position and orientation information of the vehicle in the survey coordinate system.

This disclosure further provides a calibrator device that is separately connected to a LiDAR and a survey device for determining a relative position and orientation relationship between the LiDAR and a vehicle; the calibrator device including:

a data receiver unit configured to receive a point cloud determined by the LiDAR from a field of view and a set of survey points determined by the survey device from the field of view, the point cloud being in a LiDAR coordinate system and the set of survey points being in a survey coordinate system; and
a data processor unit configured to determine a first transformation parameter between the LiDAR coordinate system and the survey coordinate system based on the point cloud and the set of survey points, and to determine a calibration parameter between the LiDAR coordinate system and a vehicle coordinate system for the vehicle based on the first transformation parameter and position and orientation information of the vehicle in the survey coordinate system.

This disclosure further provides a calibrator device, including: a memory and a processor, the memory having stored thereon computer instructions that can be run on the processor, and the processor, when running the computer instructions, executing steps of the method as described in any of the foregoing.

This disclosure further provides a calibration system, including: a survey device and a calibrator device, the calibrator device being separately connected to the survey device and a LiDAR for determining a relative position and orientation relationship between the LiDAR and a vehicle, where:

the LiDAR is configured to determine a point cloud corresponding to a field of view, the point cloud being in a LiDAR coordinate system; and
the survey device is configured to determine a set of survey points corresponding to the field of view, the set of survey points being in a survey coordinate system; and
the calibrator device is configured to receive the point cloud and the set of survey points, to determine a first transformation parameter between the LiDAR coordinate system and the survey coordinate system based on the point cloud and the set of survey points, and to determine a calibration parameter between the LiDAR coordinate system and a vehicle coordinate system for the vehicle based on the first transformation parameter and position and orientation information of the vehicle in the survey coordinate system.

This disclosure further provides a non-transitory readable storage medium having computer instructions stored thereon, where the computer instructions, when run, performing steps of the method as described in any of the foregoing.

The calibration method provided in this disclosure can be configured to determine a relative position and orientation relationship between a LiDAR and a vehicle. The calibration method can determine a first transformation parameter between the LiDAR coordinate system and the survey coordinate system by means of a point cloud determined by the LiDAR from a field of view and a set of survey points determined by a survey device from the field of view; and the calibration method can determine a calibration parameter between the LiDAR coordinate system and a vehicle coordinate system for the vehicle based on the first transformation parameter and position and orientation information of the vehicle in the survey coordinate system.

With the scheme, on the one hand, the first transformation parameter determined based on the point cloud and the set of survey points can characterize the relative position and orientation relationship between the LiDAR coordinate system and the survey coordinate system, which enables the data to be transformed between the LiDAR coordinate system and the survey coordinate system, whereas the position and orientation information of the vehicle in the represent survey coordinate system can represent the relative position and orientation relationship between the vehicle coordinate system and the survey coordinate system, which means that the relative position and orientation relationship between the vehicle coordinate system and the survey coordinate system is relatively fixed. As a result, the time for determining the relative position and orientation relationship between the vehicle coordinate system and the survey coordinate system can be eliminated, and the calibration between the LiDAR coordinate system and the vehicle coordinate system can be quickly completed by means of intermediate transformation in the survey coordinate system, thereby improving the calibration efficiency. On the other hand, the survey device has a high-precision measurement performance, so that the survey device can determine a high-precision set of survey points, and ensure that the position and orientation information of the vehicle in the survey coordinate system has a high precision, thereby improving the calibration precision. In summary, the calibration method provided in this disclosure is capable of improving the calibration efficiency and the calibration precision, thereby facilitating batch calibration.

**BRIEF DESCRIPTION OF DRAWINGS**

To more clearly illustrate the technical solution of this disclosure, the accompanying drawings to be used in the description of this disclosure or existing techniques are briefly introduced below, and it is obvious that the accompanying drawings described below are only some embodiments of this disclosure, and other accompanying drawings can be determined based on these drawings for those of ordinary skill in the art without creative labor.

Fig. 1 shows a flowchart of a calibration method, provided in embodiments of this disclosure.

Fig. 2 shows a flowchart of a method for determining a first transformation parameter, provided in embodiments of this disclosure.

Fig. 3 shows a flowchart of a method for updating a first transformation parameter, provided in embodiments of this disclosure.

Fig. 4 shows a schematic diagram of a surface of a reference object, provided in embodiments of this disclosure.

Fig. 5 shows a flowchart of a method for determining a matching point, provided in embodiments of this disclosure.

Fig. 6 shows a structural block diagram of a calibrator device, provided in embodiments of this disclosure.

Fig. 7 shows a structural block diagram of another calibrator device, provided in embodiments of this disclosure.

Fig. 8 shows a structural block diagram of a calibration system, provided in embodiments of this disclosure.

Fig. 9 shows a schematic diagram of an application scenario of a calibration system, provided in embodiments of this disclosure.

**DETAILED DESCRIPTION**

As can be seen from the content of the background, the existing LiDAR calibration process needs to spend a lot of time in controlling the calibration precision, which reduces the calibration efficiency of the existing LiDAR calibration schemes. Moreover, due to the low calibration efficiency, the existing LiDAR calibration schemes cannot meet the needs of batch calibration, and even if the batch calibration is performed, the batch calibration needs to consume a lot of time.

To solve the problems of the existing calibration schemes, this disclosure provides a calibration method that is used to determine a relative position and orientation relationship between a LiDAR and a vehicle. The calibration method can determine a first transformation parameter between the LiDAR coordinate system and the survey coordinate system by means of a point cloud determined by the LiDAR from a field of view and a set of survey points determined by a survey device from the field of view; and the calibration method can determine a calibration parameter between the LiDAR coordinate system and a vehicle coordinate system for the vehicle based on the first transformation parameter and position and orientation information of the vehicle in the survey coordinate system. Thereby, both the calibration efficiency and the calibration precision can be improved, thereby facilitating batch calibration.

To enable those skilled in the art to more clearly understand and implement the conception, the implementation schemes, and the advantages of this disclosure, a detailed description thereof is provided below with reference to the accompanying drawings.

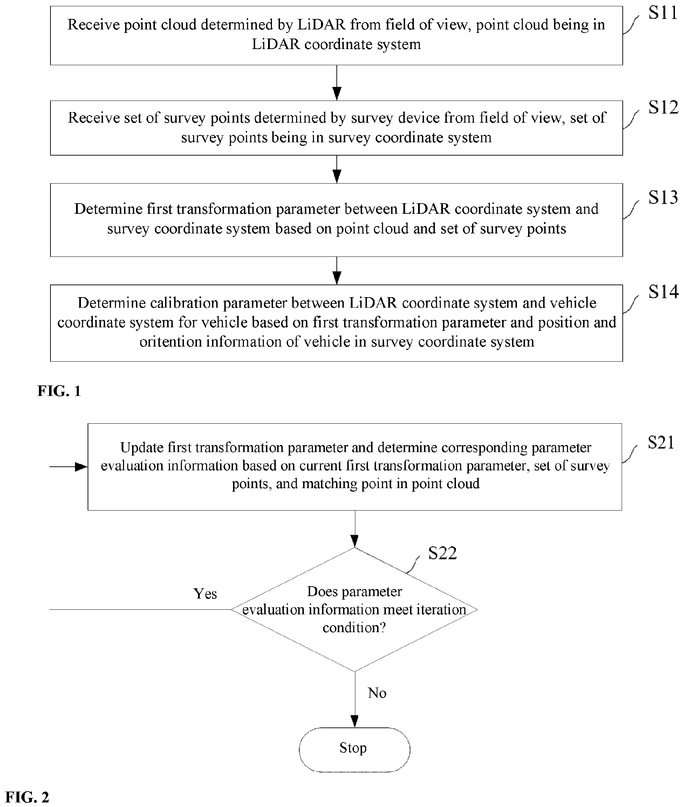

Fig. 1 shows a flowchart of a calibration method, provided in embodiments of this disclosure, which can be used to determine a relative position and orientation relationship between a LiDAR and a vehicle. In a particular implementation, the calibration method can include:

At S11, a point cloud determined by the LiDAR from a field of view is received, the point cloud being in a LiDAR coordinate system.

The LiDAR coordinate system can be a coordinate system established with a specified position in the LiDAR as the origin.

In a particular implementation, the LiDAR can emit a light signal in a field of view for LiDAR, and the light signal is reflected by a reference object in the field of view and received by the LiDAR, and based on the emitted light signal and the light signal reflected back from the reference object in the field of view, multiple data points can be generated in the field of view of the LiDAR, thereby forming a point cloud. Each of the data points can include: a coordinate value in the LiDAR coordinate system.

At S 12, a set of survey points determined by a survey device from the field of view are received, the set of survey points being in a survey coordinate system.

The survey coordinate system can be a coordinate system established with a specified position in the survey device as the origin. The survey device can be any device having high-precision measurement capability, such as a total station.

In a particular implementation, the survey device is located at a position where it is capable of performing survey of the reference object within the field of view of the LiDAR. For example, the survey device can be located above or to the side of the vehicle. For another example, the survey device can be located above, below, or to the side of the LiDAR.

It is understood that the specific arrangement position of the survey device can be determined based on practical application scenarios, which is not limited in embodiments of this disclosure.

At S 13, a first transformation parameter between the LiDAR coordinate system and the survey coordinate system is determined based on the point cloud and the set of survey points.

The first transformation parameter can include first relative displacement information and first relative angle information. The first relative displacement information can characterize a relative translation distance between the LiDAR coordinate system and the survey coordinate system, and the first relative angle information can characterize a relative rotation angle between the LiDAR coordinate system and the survey coordinate system.

Further, the first relative angle information can include at least one of pitch angle information, roll angle information, or yaw angle information between the LiDAR coordinate system and the survey coordinate system.

At S 14, a calibration parameter between the LiDAR coordinate system and a vehicle coordinate system for the vehicle is determined based on the first transformation parameter and position and orientation information of the vehicle in the survey coordinate system.

In a particular implementation, the position and orientation information of the vehicle in the survey coordinate system can include: coordinate information and orientation information of the vehicle in the survey coordinate system; further, the orientation information of the vehicle in the survey coordinate system can include: at least one of pitch angle information, roll angle information, or yaw angle information of the vehicle in the survey coordinate system.

The vehicle coordinate system can be: a coordinate system established with a specified position in the vehicle as the origin. The specified position in the vehicle can be any of: a contact point of one of the tires in the vehicle with the ground, the center point of the wheel axle of one of the tires in the vehicle, the wheel center of one of the tires in the vehicle, or an end point in the head region of the vehicle.

The calibration parameter can include second relative displacement information and second relative angle information. The second relative displacement information can characterize a relative translation distance between the LiDAR coordinate system and the survey coordinate system, and the second relative angle information can characterize a relative rotation angle between the LiDAR coordinate system and the survey coordinate system.

Further, the second relative angle information can include at least one of pitch angle information, roll angle information, or yaw angle information between the LiDAR coordinate system and the survey coordinate system.

With the scheme, on the one hand, the first transformation parameter determined based on the point cloud and the set of survey points can characterize the relative position and orientation relationship between the LiDAR coordinate system and the survey coordinate system, which enables the data to be transformed between the LiDAR coordinate system and the survey coordinate system, whereas the position and orientation information of the vehicle in the survey coordinate system can represent the relative position and orientation relationship between the vehicle coordinate system and the survey coordinate system, which means that the relative position and orientation relationship between the vehicle coordinate system and the survey coordinate system is relatively fixed. As a result, the time for determining the relative position and orientation relationship between the vehicle coordinate system and the survey coordinate system can be eliminated, and the calibration between the LiDAR coordinate system and the vehicle coordinate system can be quickly completed by means of intermediate transformation in the survey coordinate system, thereby improving the calibration efficiency. On the other hand, the survey device has a high-precision measurement performance, so that the survey device can determine a high-precision set of survey points, and it can ensure that the position and orientation information of the vehicle in the survey coordinate system has a high precision, thereby improving the calibration precision.

In summary, the calibration method provided in this disclosure is capable of improving the calibration efficiency and the calibration precision, thereby facilitating batch calibration.

It is needed to be noted that there is no necessary sequential order of execution between step S11 and step S12 in the embodiments, and step S11 and step S12 can be executed in parallel or step S11 and step S12 can be executed in a specified order based on the specific circumstances, and no specific limitation is imposed thereon in embodiments of this specification.

In a particular implementation, the position and orientation information of the vehicle in the survey coordinate system can be determined by means of transformation through a second transformation parameter between the survey coordinate system and the vehicle coordinate system, or the position and orientation information of the vehicle in the survey coordinate system can be determined by means of predetermining.

Specifically, the second transformation parameter can be determined by calibrating the vehicle coordinate system and the survey coordinate system before performing the calibration of the LiDAR coordinate system and the vehicle coordinate system. As a result, the corresponding second transformation parameter can be determined based on the position of the vehicle in the environment.

In a particular implementation, because the position and orientation information of the vehicle in the survey coordinate system can be determined through predetermining, to ensure that the position of the vehicle matches the predetermined position and orientation information in the survey coordinate system, the vehicle and the survey device can be localized by means of a third-party device.

The third-party device can be any device having an alignment function; and the relative position and orientation relationship between the third-party device and the survey device can be determined through predetermining, and data characterizing the relative position and orientation relationship between the third-party device and the survey device can be stored in any device having a storage function, such as the third-party device itself, the calibrator device configured to perform the calibration method provided in embodiments of this disclosure, or the like. No specific limitation is imposed on the specific type of the third-party device or the data storage object in embodiments of this disclosure.

In addition, the order of alignment between the vehicle, the survey device, and the third-party device can be determined based on specific scenarios and needs, and no specific limitation is imposed thereon in embodiments of this disclosure.

In an optional example, the vehicle and the survey device can be positioned by means of a positioner. Specifically, the survey device can first be aligned with a datum point on the positioner; then, the vehicle is moved to the positioner, and the vehicle stops moving when a specified portion of the vehicle (e.g., the center of the wheel, the head of the vehicle) is aligned with the datum point on the positioner. This ensures that the vehicle moves to the desired position and that the positioning between the vehicle and the survey device is completed. Alternatively, the vehicle can first be moved to the positioner, and after a specified portion of the vehicle is aligned with the datum point on the positioner, the vehicle stops moving; then, the survey device is aligned with the datum point on the positioner. Thereby, the positioning between the vehicle and the survey device is completed.

Data characterizing the relative position and orientation relationship between the survey device and the positioner can be stored in the calibrator device.

As a result, by determining the positions of the vehicle and the survey device in the environment with the positioner, repeated calibrations of the vehicle coordinate system and the survey coordinate system can be reduced, thereby reducing the amount of data computation and computation time.

In a particular implementation, the first transformation parameter can be determined by matching the point cloud with the set of survey points. The specific step of matching the point cloud with the set of survey points can include:

at A1), multiple cells are determined in the survey coordinate system and a normal distribution parameter for each cell is determined based on the distribution in each cell of each survey point in the set of survey points;

at A2), based on a predetermined transformation matrix, survey points in the set of survey points that are closest to the data points are determined to determine adjacent survey points, respectively;

at A3), based on a predetermined distribution error function, the data points, and the adjacent survey points, a distribution error is calculated; and

at A4), the value of the transformation matrix is changed based on the value of the distribution error, and with reference to the steps A2) and A3), the calculation of the distribution error continues until the error calculated conforms to a predetermined permissible error range or the number of changes reaches a predetermined number threshold, then the change is stopped, and the transformation matrix determined through the change is used as the first transformation parameter.

In a particular implementation, to improve the precision of the first transformation parameter, the first transformation parameter can be updated and evaluated. Specifically, as shown in Fig. 2, a flowchart of a method for determining a first transformation parameter, provided in an embodiment of this disclosure is shown. The process of determining the first transformation parameter between the LiDAR coordinate system and the survey coordinate system based on the point cloud and the set of survey points can specifically include the following steps:

At S21, the first transformation parameter is updated and corresponding parameter evaluation information is determined based on a current first transformation parameter, the set of survey points, and a matching point in the point cloud.

The matching point can be a data point determined based on the point cloud by means of filtering, and the filtering manner can be determined based on specific application scenarios and needs; and the parameter evaluation information can characterize at least one of an update state or an update effect of the first transformation parameter.

For example, the parameter evaluation information can include at least one of: the number of updates of the first transformation parameter for representing the update state of the first transformation parameter, or the matching error between a transformed matching point and an adjacent survey point in the set of survey points, where the transformed matching point is determined after the matching point is transformed to the survey coordinate system based on the updated first transformation parameter, for representing the update effect of the first transformation parameter.

As a result, the precision of the first transformation parameter can be improved by updating the first transformation parameter, and the parameter evaluation information can provide evaluation information related to the first transformation parameter for subsequent use. For example, the relevant evaluation information can be used and referred to when determining to perform an iterative update of the first transformation parameter, with specific reference to the descriptions in the relevant sections below, which is not be repeated herein.

In a particular implementation, after the matching point is transformed to the survey coordinate system based on the current first transformation parameter, by combining the matching point with the set of survey points, the first transformation parameter can be updated and the parameter evaluation information can be determined.

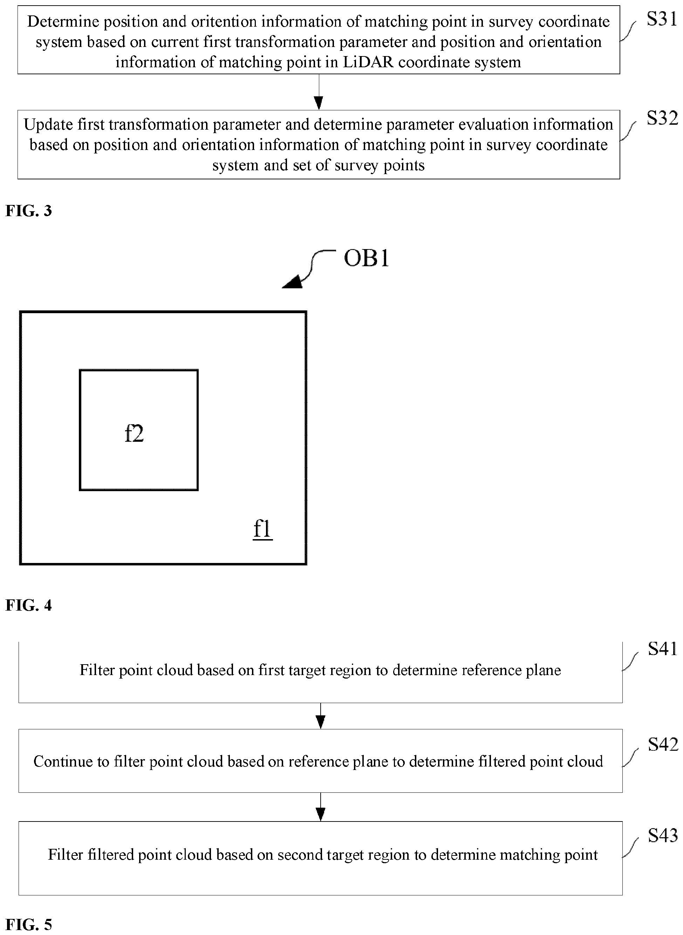

Specifically, as shown in Fig. 3, a flowchart of a method for updating a first transformation parameter, provided in embodiments of this disclosure is shown. The process of updating the first transformation parameter and determining corresponding parameter evaluation information based on the current first transformation parameter, the set of survey points, and the matching point in the point cloud can specifically include the following steps:

At S31, position and orientation information of the matching point in the survey coordinate system is determined based on the current first transformation parameter and position and orientation information of the matching point in the LiDAR coordinate system.

The position and orientation information of the matching point in the LiDAR coordinate system can include: coordinate information and orientation information of the matching point in the LiDAR coordinate system; and the position and orientation information of the matching point in the survey coordinate system can include: coordinate information and orientation information of the matching point in the survey coordinate system. Further, the orientation information can include at least one of: pitch angle information, roll angle information, or yaw angle information.

Optionally, the relationship among the position and orientation information of the matching point in the LiDAR coordinate system, the first transformation parameter, and the position and orientation information of the matching point in the survey coordinate system can be expressed by the following equation:

$$P_i^{L'} = P_i^L T_{LC}^0 \; ;$$

$P_i^{L'}$ denotes the position and orientation information of the ith matching point in the survey coordinate system;

$T_{LC}^0$ denotes the first transformation parameter that has not been updated; and $P_i^L$ denotes the position and orientation information of the ith matching point in the LiDAR coordinate system.

At S32, the first transformation parameter is updated and the parameter evaluation information is determined based on the position and orientation information of the matching point in the survey coordinate system and the set of survey points.

In a particular implementation, the updated first transformation parameter and the parameter evaluation information can be determined by matching the position and orientation information of the matching point in the survey coordinate system with the set of survey points. The specific step of the matching process can include:

> at B1), based on the position and orientation information of the matching point in the survey coordinate system and position and orientation information of survey points in the set of survey points, a survey point closest to the matching point is determined, and an adjacent survey point is determined;
> at B2), based on the matching point and the adjacent survey point, singular value decomposition ("SVD") is performed to determine a new first transformation parameter; and
> at B3), based on the matching point, the adjacent survey point, and a predetermined matching error function, a matching error between the matching point and the adjacent survey point is determined, and the number of updates of the first transformation parameter is determined, and the parameter evaluation information is determined.

The matching error function can be configured to determine: the sum of the distances between all matching points that are transformed from the LiDAR coordinate system to the survey coordinate system based on the updated first transformation parameter and the adjacent survey points. The expression of the matching error function is as follows:

$$\sum_{0 < i \leq n} |P_i^{L'} T_{LC}^j - P_i^C|;$$

$P_i^{L'}$ denotes the position and orientation information of the ith matching point among n matching points; $T_{LC}^j$ denotes the first transformation parameter after the jth update; and $P_i^C$ denotes the position and orientation information of the adjacent survey point for the ith matching point among the n matching points.

As a result, the matching point can be transformed from the LiDAR coordinate system to the survey coordinate system by means of the first transformation parameter, and the matching point and the set of survey points are comparable when the matching point and the set of survey points are in the same coordinate system, thereby ensuring that the first transformation parameter is accurately updated and reliable parameter evaluation information is determined.

In a particular implementation, to improve the computational efficiency, before determining the survey point in the set of survey points that is closest to the matching point, the set of survey points can be filtered to filter out the noisy points and reduce the amount of data. The filtering manner for the set of survey points can be determined based on the position of the matching point in the field of view of the LiDAR. For example, if the matching point corresponds to the position of point A in the field of view, the survey points related to the position of point A can be filtered from the set of survey points.

In a particular implementation, to further improve the precision of the first transformation parameter, by taking the parameter evaluation information as a basis for determining whether the first transformation parameter meets the desired precision requirement, an iteration condition can also be determined. Thereby, based on at least one parameter among the number of updates and the matching error, it is determined whether the first transformation parameter meets the expected precision requirement, and when the first transformation parameter does not meet the expected precision requirement, the updating of the first transformation parameter and the parameter evaluation information continues, so as to carry out multiple iterative updates and corresponding multiple evaluations of the current first transformation parameter.

Specifically, as shown in Fig. 2, the process of determining a first transformation parameter between the LiDAR coordinate system and the survey coordinate system based on the point cloud and the set of survey points can also include the following steps:

At S22, it is determined whether the parameter evaluation information meets the iteration condition, and when it is determined that the parameter evaluation information meets the iteration condition, the process returns to step S21to continue to update the first transformation parameter and the parameter evaluation information until it is determined that the parameter evaluation information does not meet the iteration condition.

The parameter evaluation information can be determined to meet the iteration condition in at least one of a case where the number of updates of the first transformation parameter reaches a first threshold or a case where after the matching point is transformed to the survey coordinate system based on the updated first transformation parameter, a matching error with an adjacent survey point in the set of survey points is not greater than a second threshold.

As a result, the precision of the first transformation parameter can be further improved by means of iterative updating of the first transformation parameter.

In a particular implementation, to improve the filtering speed, a target region can be determined, so that based on the target region, the point cloud is filtered and the matching point is determined. The number of and the size of the target region can be determined based on the surface features of a reference object present in the field of view of the LiDAR, and no specific limitation is imposed thereon in this disclosure.

In an optional example, as shown in Fig. 4, a schematic diagram of the surface of a reference object is shown. In Fig. 4, the surface of the reference object OB 1 includes a first region f1 and a second region f2, and the reflectivity of the first region f1 being different from the reflectivity of the second region f2, the surface features of the reference object OB1 can include: an overall outer contour of the reference object OB 1, a geometrical center of the surface of the reference object OB1, a contour of the first region f1, a contour of the second region f2, a geometrical center of the first region f1, a geometrical center of the second region f2, or the like.

Accordingly, based on the surface features of the reference object OB1, one or more target regions can be determined. Based on specific application scenarios and needs, target regions that contain, match, or exclude the surface features of the reference object can be determined. For example, a target region having the overall outer contour of the reference object OB 1 can be determined; a target region excluding the first region f1 can also be determined; and a target region matching the geometrical center of the second region f2 can also be determined.

It is to be understood that the reference object shown in Fig. 4 is for schematic illustration only, while in practical applications, there can be more reference objects in the field of view, and the shapes of the reference objects and the regional distribution of the surface reflectivity can be more complex, and this disclosure does not impose any specific limitation thereon.

In a particular implementation, to improve the precision of the filtering, the point cloud can be filtered successively based on target regions having different information to gradually reduce the filtering range from different dimensions, thereby determining more accurate matching points.

In an optional example, as shown in Fig. 5, a flowchart of a method for determining a matching point is shown, which can be applied to a reference object with regions of different reflectivity on the surface. The method can specifically include the following steps:

At S41, the point cloud is filtered based on a first target region to determine a reference plane.

In a particular implementation, the first target region can have position and orientation information. The position and orientation information of the first target region is matched with position and orientation information of data points in the point cloud to extract data points matching the first target region, thereby determining the reference plane.

By clustering the data points matching the first target region, a corresponding plane equation can be determined to determine the reference plane.

In a particular implementation, to facilitate setting the position and orientation information of the first target region, the first target region can correspond to the plane in which the bottom surface of the reference object is located. For example, if the reference object is placed on the ground, the first target region can correspond to the ground, and the reference plane is the determined plane equation of the ground.

As a result, a height coordinate information of the first target region can be determined based on the vertical distance between the bottom surface of the reference object and the LiDAR. The data points matching the plane in which the bottom surface of the reference object is located can be filtered from the point cloud based on the height coordinate information of the first target region.

At S42, a filtered point cloud is determined by continuing to filter the point cloud based on the reference plane.

In a particular implementation, distance values from data points in the point cloud to the reference plane can be determined, and based on the distance values, the point cloud is filtered to determine the filtered point cloud.

Specifically, because the reference plane can be characterized by a plane equation, the distance values from the data points to the reference plane can be determined based on the normal vector determined from the plane equation as well as the coordinate information of the data points. Then, based on the shape of the reference object, a corresponding distance range can be determined, so as to determine data points having distance values conforming to the distance range as the filtered point cloud.

The shape of the reference object can be determined as a regular shape to facilitate setting the distance range. For example, the reference plane is a determined plane equation of the ground, and the reference object is a rectangular panel. As a result, the distance range can be determined based on the distance from the top of the panel in the reference object that is opposite to the LiDAR to the ground, and the distance from the bottom end of the panel to the ground.

As a result, data points related to the reference object can be roughly extracted.

In a particular implementation, to remove useless data points (e.g., noisy points, discrete data points) and reduce the amount of data, in the process of filtering the point cloud based on the distance range, at least one of clustering filtering processing or region filtering processing can be performed on the point cloud.

Specifically, the clustering filtering processing can include: extracting data points from the point cloud having distance values conforming to the distance range and performing clustering; and filtering, when determining that a clustering result meets a cyclic condition, the clustering result and continuing to perform clustering until determining that the clustering result does not meet the cyclic condition to determine the filtered point cloud. The cyclic condition can be related to the number of categories indicated in the clustering result. For example, the cyclic condition can be determined as follows: the number of categories indicated in the clustering result is greater than N, N being a natural number.

The region filtering processing can include: extracting data points from the point cloud having distance values conforming to a distance range and dividing the data points into multiple point cloud regions in a first direction; determining respective spatial information of the multiple point cloud regions in a second direction, and filtering the multiple point cloud regions based on the spatial information to determine the filtered point cloud.

The first direction can intersect with the second direction; and the spatial information can include: a distance variance determined based on distances of data points in the point cloud region to a specified plane in the second direction. Further, the specified plane can be any plane parallel to the first direction.

As a result, data points that are related to the reference object can be distinguished from data points that are not related to the reference object (e.g., support rods for fixing the reference object, noisy points, or the like.)

At S43, the filtered point cloud is filtered based on a second target region to determine the matching point.

In a particular implementation, the second target region can have reflectivity information. The reflectivity information of the second target region is matched with reflectivity information of data points in the filtered point cloud to determine multiple specified position points and planarity corresponding to the multiple specified position points based on data points matching the second target region; and the multiple specified position points are filtered based on the planarity to determine the matching point.

Specifically, the data points matching the second target region can be clustered, so as to determine the multiple specified position points and the planarity corresponding to the multiple specified position points based on the clustering result. For example, if the data points matching the second target region are clustered and multiple categories are determined, the specified position points can be selected separately from data points corresponding to the categories, or the specified position points can be determined based on data points corresponding to the categories. Moreover, the data points corresponding to the categories can form a plane, and a corresponding planarity can be determined through calculation.

In a particular implementation, a second target region can be determined based on the reflectivity distribution on the surface of the reference object, so as to determine the matching point for the corresponding resolution region.

For example, if the surface of the reference object includes one or more regions having fixed resolution (e.g., high resolution) and a regular shape, the region with the regular shape can be determined as the second target region, and the geometrical center of the region can be used as a matching point.

As a result, based on different filtering criteria (e.g., the first target region, the reference plane, and the second target region), the point cloud is filtered successively to gradually reduce the filtering range from different dimensions to improve the filtering precision, thereby determining more accurate matching points.

It is to be understood that multiple embodiment schemes provided in this disclosure are described, and that various optional approaches introduced in the various embodiment schemes can be combined and cross-referenced with each other without conflict, thereby extending multiple possible embodiment schemes, all of which can be considered embodiment schemes disclosed in this disclosure.

This disclosure further provides a calibrator device corresponding to the calibration method described, which is described in detail below by way of particular embodiments with reference to the accompanying drawings. It is to be known that the calibrator device described below can be considered as a functional module required to be provided for realizing the calibration method provided in this disclosure; and that the contents of the calibrator device described below can be cross-referenced in correspondence with the contents of the calibration method described.

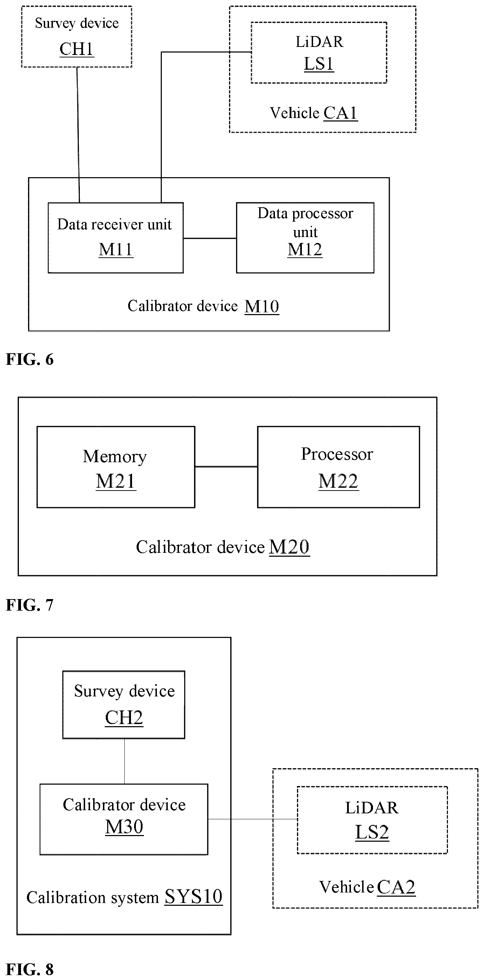

In an optional example, as shown in Fig. 6, a structural block diagram of a calibrator device in embodiments of this disclosure is shown. In Fig. 6, the calibrator device M10 can be separately connected to a LiDAR LS 1 and a survey device CH1. The LiDAR LS1 can be provided on the vehicle CA1; and the calibrator device M10 can include:

a data receiver unit M11 configured to receive a point cloud determined by the LiDAR LSA from a field of view and a set of survey points determined by the survey device CH1 from the field of view, the point cloud being in a LiDAR coordinate system and the set of survey points being in a survey coordinate system; and

a data processor unit M12 configured to determine a first transformation parameter between the LiDAR coordinate system and the survey coordinate system based on the point cloud and the set of survey points, and to determine a calibration parameter between the LiDAR coordinate system and the vehicle coordinate system for the vehicle CA1 based on the first transformation parameter and position and orientation information of the vehicle CA1 in the survey coordinate system.

As can be seen from the above, with the calibrator device, on the one hand, the first transformation parameter determined based on the point cloud and the set of survey points can characterize the relative position and orientation relationship between the LiDAR coordinate system and the survey coordinate system, which enables the data to be transformed between the LiDAR coordinate system and the survey coordinate system, whereas the position and orientation information of the vehicle in the survey coordinate system can represent the relative position and orientation relationship between the vehicle coordinate system and the survey coordinate system, which means that the relative position and orientation relationship between the vehicle coordinate system and the survey coordinate system is relatively fixed. As a result, the time for determining the relative position and orientation relationship between the vehicle coordinate system and the survey coordinate system can be eliminated, and the calibration between the LiDAR coordinate system and the vehicle coordinate system can be quickly completed by means of intermediate transformation in the survey coordinate system, thereby improving the calibration efficiency. On the other hand, the survey device has a high-precision measurement performance, so that the survey device can determine a high-precision set of survey points, and the survey device can ensure that the position and orientation information of the vehicle in the survey coordinate system has a high precision, thereby improving the calibration precision.

In summary, the calibrator device provided in this disclosure is capable of improving the calibration efficiency and the calibration precision, thereby facilitating batch calibration.

It is to be understood that for the specific process of determining the calibration parameters by the data processor unit in the calibrator device, reference can be made to the description in the calibration method section, which is not be repeated herein.

In another optional example, as shown in Fig. 7, a structural block diagram of another calibrator device in embodiments of this disclosure is shown. In Fig. 7, a calibrator device M20 can include: a memory M21 and a processor M22, the memory M21 having stored thereon computer instructions that can be run on the processor M22, and the processor M22, when running the computer instructions, being capable of executing the steps of the calibration method as described in any of the embodiments. Specific reference can be made to the related contents, which is not be repeated herein.

In a particular implementation, the processor can include a central processing unit ("CPU"), a graphics processing unit ("GPU"), a field programmable logic gate array ("FPGA"), or the like. The memory can include a random access memory ("RAM"), a read-only memory ("ROM"), a non-volatile memory ("NVM"), or the like.

In a particular implementation, the computer instructions can include any suitable type of code implemented through at least one of the use of any suitable high-level, low-level, object-oriented, visual, compiled or interpreted programming language, for example, source code, compiled code, interpreted code, executable code, static code, dynamic code, encrypted code, or the like.

This disclosure further provides a calibration system including the calibrator device described, which is described in detail hereinafter by way of particular embodiments with reference to the accompanying drawings. It is to be known that the contents of the calibration system described below can be cross-referenced in correspondence with the contents of the calibration method and the calibrator device described.

In a particular implementation, as shown in Fig. 8, a structural block diagram of a calibration system provided in embodiments of this disclosure is shown. In Fig. 8, the calibration system SYS 10 can include: a LiDAR LS2, a survey device CH2, and a calibrator device M30. The calibrator device M30 can be connected to the LiDAR LS2 and the calibrator device CH2; and the LiDAR LS2 is provided on a vehicle CA2, where:

the LiDAR LS2 is configured to determine a point cloud corresponding to a field of view, the point cloud being in a LiDAR coordinate system; and
the survey device CH2 is configured to determine a set of survey points corresponding to the field of view, the set of survey points being in a survey coordinate system; and
the calibrator device M30 is configured to receive the point cloud and the set of survey points, to determine a first transformation parameter between the LiDAR coordinate system and the survey coordinate system based on the point cloud and the set of survey points, and to determine a calibration parameter between the LiDAR coordinate system and the vehicle coordinate system for the vehicle CA2 based on the first transformation parameter and position and orientation information of the vehicle CA2 in the survey coordinate system.

As can be seen from the above, with the calibration system, on the one hand, the first transformation parameter determined based on the point cloud and the set of survey points can characterize the relative position and orientation relationship between the LiDAR coordinate system and the survey coordinate system, which enables the data to be transformed between the LiDAR coordinate system and the survey coordinate system, whereas the position and orientation information of the vehicle in the survey coordinate system can represent the relative position and orientation relationship between the vehicle coordinate system and the survey coordinate system, which means that the relative position and orientation relationship between the vehicle coordinate system and the survey coordinate system is relatively fixed. As a result, the time for determining the relative position and orientation relationship between the vehicle coordinate system and the survey coordinate system can be eliminated, and the calibration between the LiDAR coordinate system and the vehicle coordinate system can be quickly completed by means of intermediate transformation in the survey coordinate system, thereby improving the calibration efficiency. On the other hand, the survey device has a high-precision measurement performance, so that the survey device can determine a high-precision set of survey points, and the survey device can ensure that the position and orientation information of the vehicle in the survey coordinate system has a high precision, thereby improving the calibration precision.

In summary, the calibration system provided in this disclosure is capable of improving the calibration efficiency and the calibration precision, thereby facilitating batch calibration, and thus the calibration system can be applied to scenarios having the requirements of batch calibration of LiDAR and vehicles, for example, the vehicle production scenario.

It is to be understood that for the specific process of determining the calibration parameters by the calibrator device in the calibration system, reference can be made to the description in the calibration method section, which is not be repeated herein.

In a particular implementation, a reference object is in the field of view, a surface of the reference object can include a first region and a second region, the reflectivity of the first region being different from that of the second region.

It is to be understood that the number of reference objects, the number of first regions and the number of second regions can be determined based on specific application scenarios and needs, which is not limited in this disclosure.

It is also to be understood that the placement position of the reference object, and the distribution of the first region and the second region on the surface of the reference object can be determined based on specific application scenarios and needs, which is not limited in this disclosure.

To enable those skilled in the art to more clearly understand and implement the conception, the implementation schemes, and the advantages of this disclosure, a detailed description thereof is provided below by means of application scenarios.

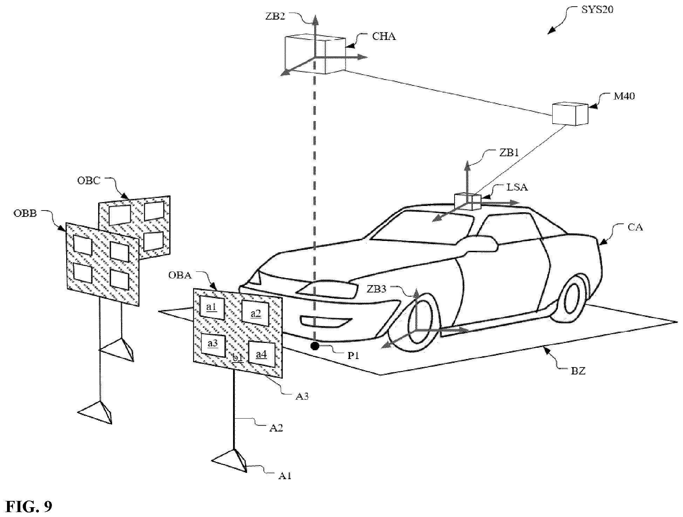

In an optional example, as shown in Fig. 9, a schematic diagram of an application scenario of a calibration system, provided in embodiments of this disclosure is shown. In Fig. 9, the calibration system can include: a positioner BZ, a survey device CHA, and a calibrator device M40.

Furthermore, in this example scenario, multiple reference objects (e.g., reference objects OBA, OBB, and OBC shown in Fig. 9) can be included, the multiple reference objects OBA, OBB, and OBC having similar structures.

Taking the reference object OBA as an example, the reference object OBA includes a base A1, a support rod A2, and a panel A3.The panel A3 includes multiple first regions having high reflectivity (e.g., the first regions a1, a2, a3, and a4 having high reflectivity as shown in Fig. 9), and one second region b1 having low reflectivity. The first regions a1, a2, a3, and a4 having high reflectivity can be made from a material having reflectivity of 90%-95%, and the second region b1 having low reflectivity can be made from a material having reflectivity of 5%-10%.

Further, to facilitate data filtering, the contour of the first region can be a geometric figure, such as a polygon, a circle, or the like. In Fig. 9, the first regions a1-a4 are square.

The structures of the reference objects OBB and OBC can refer to the structure of the reference object OBA, which is not be repeated here. The reference objects OBA, OBB, and OBC are arranged in a staggered manner in the environment, so that the panels of the reference objects OBA, OBB, and OBC are not in the same plane.

The survey device CHA is arranged the reference objects OBA, OBB, and OBC, and aligned with the datum point P1 of the positioner BZ, where the data characterizing the relative position and orientation relationship between the survey device CHA and the positioner BZ is stored in the calibrator device M40.

When the head of a vehicle equipped with a LiDAR (e.g., the vehicle CA that is provided with a LiDAR LSA on the roof shown in Fig. 9) moves to the datum point P1, the vehicle CA stops moving, and the positioning between the vehicle CA and the survey device CHA is completed.

The LiDAR LSA faces the reference objects OBA, OBB, and OBC, and the reference objects OBA, OBB, and OBC are in the field of view of the LiDAR LSA. Using the LiDAR LSA, based on the emitted light signal and the light signal reflected by the reference objects OBA, OBB, and OBC, the point cloud corresponding to the field of view can be determined, the point cloud being in the LiDAR coordinate system ZB 1.

Using the survey device CHA, the reference objects OBA, OBB, and OBC are measured, and a set of survey points corresponding to the field of view can be determined, the set of survey points being in the survey coordinate system ZB2.

The calibrator device M40 can be connected separately with the survey device CHA and the LiDAR LSA. The calibrator device M40 can calibrate the LiDAR coordinate system ZB 1 and the vehicle coordinate system ZB3 of the vehicle CA to determine calibration parameters. The calibrator device M40 can specifically perform the following steps:

> At C1), by matching the set of survey points in the survey coordinate system ZB2 with the point cloud in the LiDAR coordinate system ZB1, a first transformation parameter can be determined.
> At C2), in the point cloud in the LiDAR coordinate system ZB 1, the height coordinate information of the data points is used as the filtering basis to filter data points corresponding to the ground (i.e., the first target region in this example), and the data points corresponding to the ground are clustered to determine a plane equation of the ground (i.e., the reference plane in this example).

At C3), based on the plane equation of the ground, the distance values from the data points in the point cloud to the ground can be determined.

At C4), the distances from the panels of the reference objects OBA, OBB, and OBC to the ground are configured to set a distance range, and the distance values from the data points to the ground are used as the basis to filter the point cloud, and point clouds corresponding to the panels of the reference objects OBA, OBB, and OBC are determined though the filtering. In this way, the point clouds related to the reference objects OBA, OBB, and OBC can be roughly extracted.

At C5), for the point clouds corresponding to the panels of the reference objects OBA, OBB, and OBC, clustering filtering processing and region filtering processing can be performed separately to determine the filtered point clouds corresponding to the panels of the reference objects.

Taking the reference object OBA as an example, if the number of categories determined by clustering the point cloud corresponding to the panel A3 of the reference object OBA is 1, this point cloud is considered to be a point cloud corresponding to the panel A3 though the clustering filtering processing, then the cyclic condition is not met, and the next step C6) can be performed; and if the number of categories determined through clustering is greater than 1, the cyclic condition is met, and then the category with the largest number of data points is retained, and clustering is performed again on the data points corresponding to this category until the number of categories determined through clustering is 1, thereby determining the point cloud corresponding to the panel A3 though the clustering filtering processing.

Based on the point cloud corresponding to the panel A3 though the clustering filtering processing, the geometrical center point of the panel A3 of the reference object OBA is determined, and the horizontal distance values between the data points and the geometrical center point of the panel A3 in a horizontal direction of the panel A3 and the vertical distance values between the data points and the geometrical center point of the panel A3 in a vertical direction of the panel A3 are determined, and based on the vertical distance values of the data points, the data points are divided in the horizontal direction to determine multiple point cloud regions.

For the horizontal distance values of the data points within each point cloud region, a distance variance is determined and is used as the spatial information of each point cloud region. When the distance variance of a point cloud region is greater than a variance threshold, the data points within that point cloud region are retained to determine the filtered point cloud corresponding to the panel A3.

As a result, data points that are related to the reference objects OBA, OBB, and OBC can be distinguished from data points that are not related to the reference objects OBA, OBB, and OBC (e.g., noisy points, discrete data points corresponding to the support rod, or the like), thereby ensuring that the filtered point cloud can accurately correspond to the panels of the reference objects OBA, OBB, and OBC.

At C6), A reflectivity threshold is determined based on the reflectivity of the first region (i.e., the second target region in this example). For the filtered point cloud corresponding to the panel of each reference object, the data points corresponding to the first region are filtered based on the reflectivity threshold for clustering, thereby determining the point cloud corresponding to each first region of the corresponding reference object. Then, based on the point cloud corresponding to each first region, a geometrical center data point (i.e., a specified position point) and a corresponding planarity of the corresponding first region are determined, and a geometrical center data point with a planarity greater than a planarity threshold is used as a matching point. The matching point is in the LiDAR coordinate system ZB 1.

Taking the reference object OBA as an example, for the filtered point cloud corresponding to the panel A3, the data points corresponding to the multiple first regions a1-a4 are filtered based on the reflectivity threshold and clustered to determine the point cloud corresponding to the first region a1, the point cloud corresponding to the first region a2, the point cloud corresponding to the first region a3, and the point cloud corresponding to the first region a4.

Then, based on the point cloud corresponding to the first region a1, the geometrical center data point and the corresponding planarity of the first region a1 are determined. By analogy, the geometrical center data point and the corresponding planarity of the first region a2, the geometrical center data point and the corresponding planarity of the first region a3, and the geometrical center data point and the corresponding planarity of the first region a4 are determined, and the geometrical center data point of which the planarity is greater than the planarity threshold is used as the matching point.

At C7), position and orientation information of the matching point in the survey coordinate system ZB2 is determined based on the current first transformation parameter and position and orientation information of the matching point in the LiDAR coordinate system ZB 1.

At C8), in the set of survey points, a survey point corresponding to the geometrical center point of the first region of a corresponding reference object is determined, and the coordinate information of the survey point corresponding to the geometrical center point is matched with the coordinate information of the matching point in the survey coordinate system ZB2, and a new first transformation parameter and parameter evaluation information is determined.

At C9), it is determined whether the parameter evaluation information meets the iteration condition, and when it is determined that the parameter evaluation information meets the iteration condition, the updating of the first transformation parameter and the parameter evaluation information continues until it is determined that the parameter evaluation information does not meet the iteration condition, and the final first transformation parameter is determined.

At C10), a calibration parameter between the LiDAR coordinate system and a vehicle coordinate system for the vehicle is determined based on the first transformation parameter and position and orientation information of the vehicle in the survey coordinate system.

As a result, the calibrator device M40 completes the calibration between the LiDAR coordinate system ZB1 and the vehicle coordinate system ZB3, where the time consumed for the calibration can be about 1 minute and the error of the calibration can be within 1 cm, resulting in a high efficiency and high calibration precision.

This disclosure further provides a computer-readable storage medium having computer instructions stored thereon, where the computer instructions, when run, can execute the steps of the calibration method as described in any of the embodiments of this disclosure. Specific reference can be made to the related contents, which is not be repeated herein.

The computer-readable storage medium can include at least one of any suitable type of memory unit, memory device, memory item, memory medium, storage device, storage item, storage medium, or storage unit. Examples include memory, removable or non-removable media, erasable or non-erasable media, writable or rewritable media, digital or analog media, hard disks, floppy disks, compact disc read-only memories ("CD-ROMs"), recordable compact discs ("CD-Rs"), rewritable compact discs ("CD-RWs"), optical discs, magnetic media, magneto-optical media, removable memory cards or diskettes, various types of digital versatile discs ("DVD"), magnetic tapes, cassettes, or the like.

In addition, the computer instructions can include any suitable type of code implemented through at least one of the use of any suitable high-level, low-level, object-oriented, visual, compiled or interpreted programming language, for example, source code, compiled code, interpreted code, executable code, static code, dynamic code, encrypted code, or the like.

It is to be noted that "an embodiment" or "embodiments" referred to in this disclosure refers to particular features, structures or characteristics that can be included in at least one implementation of this disclosure. Furthermore, in the description of this disclosure, the terms "first", "second", or the like are used for descriptive purpose only, and are not to be understood as indicating or implying relative importance or implicitly specifying the number of technical features indicated. Thus, a feature defined by the terms "first" and "second" can include one or more such features explicitly or implicitly. Moreover, the terms "first", "second", or the like are used to distinguish between similar objects and are not necessarily used to describe a particular order or to indicate significance. It is to be understood that the terms so used are interchangeable, where appropriate, to enable the embodiments of this disclosure described herein to be practiced in an order other than those illustrated or described herein.

It is to be understood that in the description of this disclosure, unless otherwise expressly provided and limited, terms in this disclosure can be understood in light of different application scenarios. For example, the verb "connect" can be understood as wired connection, wireless connection, or other actions. For those of ordinary skill in the art, the specific meanings of the terms in this disclosure can be understood in light of specific situations.

Furthermore, in the description of this disclosure, unless otherwise specified and limited, the first feature being "above" or "below" the second feature can include direct contact between the first and second features, or the first and second features being in contact not directly but through additional features between them. Moreover, the first feature being "above" the second feature can include the first feature being directly and diagonally the second feature, or simply indicate that the height of the first feature is greater than that of the second feature. The first feature being "below" the second feature can include the first feature being directly below and diagonally below the second feature, or simply indicate that the height of the first feature is smaller than that of the second feature.

Although embodiments of this disclosure are disclosed as above, this disclosure is not limited thereto. Any person skilled in the art can make various changes and modifications without departing from the spirit and scope of this disclosure, and therefore the scope of protection of this disclosure shall be subject to the scope limited by the claims.

## Claims

1. A calibration method for determining a relative position and orientation relationship between a LiDAR and a vehicle, the calibration method comprising:

receiving a point cloud determined by the LiDAR from a field of view, the point cloud being in a LiDAR coordinate system;
receiving a set of survey points determined by a survey device from the field of view, the set of survey points being in a survey coordinate system;
determining, based on the point cloud and the set of survey points, a first transformation parameter between the LiDAR coordinate system and the survey coordinate system; and determining, based on the first transformation parameter and position and orientation information of the vehicle in the survey coordinate system, a calibration parameter between the LiDAR coordinate system and a vehicle coordinate system for the vehicle.

2. The calibration method of claim 1, wherein the position and orientation information of the vehicle in the survey coordinate system is determined by transformation through a second transformation parameter between the survey coordinate system and the vehicle coordinate system; or
the position and orientation information of the vehicle in the survey coordinate system is determined by predetermining.

3. The calibration method of claim 1, wherein the determining the first transformation parameter between the LiDAR coordinate system and the survey coordinate system based on the point cloud and the set of survey points comprises:
updating the first transformation parameter and determining corresponding parameter evaluation information based on a current first transformation parameter, the set of survey points, and a matching point in the point cloud.

4. The calibration method of claim 3, wherein the updating the first transformation parameter and determining corresponding parameter evaluation information based on the current first transformation parameter, the set of survey points, and the matching point in the point cloud comprises:

    determining position and orientation information of the matching point in the survey coordinate system based on the current first transformation parameter and position and orientation information of the matching point in the LiDAR coordinate system; and
    updating the first transformation parameter and determining the parameter evaluation information based on the position and orientation information of the matching point in the survey coordinate system and the set of survey points.

5. The calibration method of claim 3, wherein the determining the first transformation parameter between the LiDAR coordinate system and the survey coordinate system based on the point cloud and the set of survey points further comprises:
when determining that the parameter evaluation information meets an iteration condition, continuing to update the first transformation parameter and the parameter evaluation information until determining that the parameter evaluation information does not meet the iteration condition.

6. The calibration method of claim 5, wherein the parameter evaluation information is determined to meet the iteration condition in at least one of a case where the number of updates of the first transformation parameter reaches a first threshold or a case where after the matching point is transformed to the survey coordinate system based on the updated first transformation parameter, a matching error with an adjacent survey point in the set of survey points is not greater than a second threshold.

7. The calibration method of claim 3, wherein before the updating the first transformation parameter and determining corresponding parameter evaluation information based on the current first transformation parameter, the set of survey points, and the matching point in the point cloud, the calibration method comprises:
filtering the point cloud based on a target region to determine the matching point.

8. The calibration method of claim 7, wherein the filtering the point cloud based on a target region to determine the matching point comprises:

    filtering the point cloud based on a first target region to determine a reference plane; continuing to filter the point cloud based on the reference plane to determine a filtered point cloud; and
    filtering the filtered point cloud based on a second target region to determine the matching point.

9. The calibration method of claim 8, wherein the filtering the point cloud based on a first target region to determine a reference plane comprises:
matching position and orientation information of the first target region with position and orientation information of data points in the point cloud to determine the reference plane.

10. The calibration method of claim 8, wherein the continuing to filter the point cloud based on the reference plane to determine a filtered point cloud comprises:

    determining distance values from data points in the point cloud to the reference plane; and
    continuing to filter the point cloud based on the distance values to determine the filtered point cloud.

11. The calibration method of claim 10, wherein the continuing to filter the point cloud based on the distance values to determine the filtered point cloud comprises:

> extracting data points from the point cloud having distance values conforming to a distance range and performing clustering; and
> filtering, when determining that a clustering result meets a cyclic condition, the clustering result and continuing to perform clustering until determining that the clustering result does not meet the cyclic condition to determine the filtered point cloud.

12. The calibration method of claim 10, wherein the filtering the point cloud based on the distance values to determine the filtered point cloud comprises:

> extracting data points from the point cloud having distance values conforming to a distance range and dividing the data points into a plurality of point cloud regions in a first direction;
> determining respective spatial information of the plurality of point cloud regions in a second direction, the first direction intersecting with the second direction; and
> filtering the plurality of point cloud regions based on the spatial information to determine the filtered point cloud.

13. The calibration method of claim 8, wherein the filtering the filtered point cloud based on a second target region to determine the matching point comprises:

> matching reflectivity information of the second target region with reflectivity information of data points in the filtered point cloud to determine a plurality of specified position points and corresponding planarity; and
> filtering the plurality of specified position points based on the planarity to determine the matching point.

14. The calibration method of claim 13, wherein the plurality of specified position points and the corresponding planarity are determined by clustering data points matching the second target region.

15. A calibrator device connected to a LiDAR and a survey device and configured to determine a relative position and orientation relationship between the LiDAR and a vehicle, the calibrator device comprising:

> a data receiver unit configured to receive a point cloud determined by the LiDAR from a field of view and a set of survey points determined by the survey device from the field of view, the point cloud being in a LiDAR coordinate system and the set of survey points being in a survey coordinate system; and
> a data processor unit configured to determine a first transformation parameter between the LiDAR coordinate system and the survey coordinate system based on the point cloud and the set of survey points, and to determine a calibration parameter between the LiDAR coordinate system and a vehicle coordinate system for the vehicle based on the first transformation parameter and position and orientation information of the vehicle in the survey coordinate system.

16. A calibrator device, comprising:
a memory and a processor, the memory having stored thereon computer instructions that can be run on the processor, wherein the processor, when running the computer instructions, executes steps of the method of any of claims 1 to 14.

17. A calibration system, comprising:

> a survey device and a calibrator device, the calibrator device being separately connected to the survey device and a LiDAR and configured to determine a relative position and orientation relationship between the LiDAR and a vehicle, wherein
> the LiDAR is configured to determine a point cloud corresponding to a field of view, the point cloud being in a LiDAR coordinate system;
> the survey device is configured to determine a set of survey points corresponding to the field of view, the set of survey points being in a survey coordinate system; and
> the calibrator device is configured to receive the point cloud and the set of survey points, to determine a first transformation parameter between the LiDAR coordinate system and the survey coordinate system based on the point cloud and the set of survey points, and to determine a calibration parameter between the LiDAR coordinate system and a vehicle coordinate system for the vehicle based on the first transformation parameter and position and orientation information of the vehicle in the survey coordinate system.

18. The calibration system of claim 17, wherein a reference object is in the field of view, a surface of the reference object comprises a first region and a second region, the reflectivity of the first region being different from the reflectivity of the second region.

19. A readable storage medium having computer instructions stored thereon, wherein the computer instructions, when run, perform steps of the method of any of claims 1 to 14.

15

Receive point cloud determined by LiDAR from field of view, point cloud being in LiDAR coordinate system ⟋ S11

Receive set of survey points determined by survey device from field of view, set of survey points being in survey coordinate system ⟋ S12

Determine first transformation parameter between LiDAR coordinate system and survey coordinate system based on point cloud and set of survey points ⟋ S13

Determine calibration parameter between LiDAR coordinate system and vehicle coordinate system for vehicle based on first transformation parameter and position and oritention information of vehicle in survey coordinate system ⟋ S14

**FIG. 1**

Update first transformation parameter and determine corresponding parameter evaluation information based on current first transformation parameter, set of survey points, and matching point in point cloud ⟋ S21

S22

Yes

Does parameter evaluation information meet iteration condition?

No

Stop

**FIG. 2**

| Determine position and oritention information of matching point in survey coordinate system based on current first transformation parameter and position and orientation information of matching point in LiDAR coordinate system | S31 |

↓

| Update first transformation parameter and determine parameter evaluation information based on position and orientation information of matching point in survey coordinate system and set of survey points | S32 |

**FIG. 3**

OB1

f2

f1

**FIG. 4**

| Filter point cloud based on first target region to determine reference plane | S41 |

↓

| Continue to filter point cloud based on reference plane to determine filtered point cloud | S42 |

↓

| Filter filtered point cloud based on second target region to determine matching point | S43 |

**FIG. 5**

Survey device
CH1

LiDAR
LS1

Vehicle CA1

Data receiver unit
M11

Data processor unit
M12

Calibrator device M10

**FIG. 6**

Memory
M21

Processor
M22

Calibrator device M20

**FIG. 7**

Survey device
CH2

Calibrator device
M30

LiDAR
LS2

Vehicle CA2

Calibration system SYS10

**FIG. 8**

**FIG. 9**

<table>
<tr><td colspan="2" style="text-align:center">INTERNATIONAL SEARCH REPORT</td><td>International application No.<br>**PCT/CN2022/093363**</td></tr>
</table>

| A. | CLASSIFICATION OF SUBJECT MATTER |
|---|---|

G01S 7/497(2006.01)i

According to International Patent Classification (IPC) or to both national classification and IPC

| B. | FIELDS SEARCHED |
|---|---|

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT, CNKI, WPI, EPODOC: 雷达, 点云, 点集, 位姿, 姿态, 标定, 坐标, 座标, 转换, 变换, 匹配, 评价, radar?, point+, cloud, attitude?, calibrat+, coordinate?, switch+, match+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114265042 A (SHANGHAI CEREAL SCIENCE AND TECHNOLOGY CO., LTD.) 01 April 2022 (2022-04-01)<br>    description, paragraphs [0035]-[0172], and figures 1-9 | 1-19 |
| X | CN 112462350 A (SUZHOU YIJING TECHNOLOGY CO., LTD.) 09 March 2021 (2021-03-09)<br>    description, paragraphs [0046]-[0095], and figures 1-3 | 1-19 |
| A | CN 111965627 A (HUBEI ECARX TECHNOLOGY CO., LTD.) 20 November 2020 (2020-11-20)<br>    entire document | 1-19 |
| A | CN 112180362 A (BEIJING HORIZON ROBOTICS TECHNOLOGY RESEARCH AND DEVELOPMENT CO., LTD.) 05 January 2021 (2021-01-05)<br>    entire document | 1-19 |
| A | CN 109901139 A (WERIDE CORP.) 18 June 2019 (2019-06-18)<br>    entire document | 1-19 |
| A | WO 2021093240 A1 (HUAWEI TECHNOLOGIES CO., LTD.) 20 May 2021 (2021-05-20)<br>    entire document | 1-19 |

☐ Further documents are listed in the continuation of Box C.    ☑ See patent family annex.

| | |
|---|---|
| \*    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **11 August 2022** | **29 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/093363**

| Patent document cited in search report | | | Publication date (day/month/year) | Patent family member(s) | | | Publication date (day/month/year) |
|---|---|---|---|---|---|---|---|
| CN | 114265042 | A | 01 April 2022 | None | | | |
| CN | 112462350 | A | 09 March 2021 | None | | | |
| CN | 111965627 | A | 20 November 2020 | None | | | |
| CN | 112180362 | A | 05 January 2021 | None | | | |
| CN | 109901139 | A | 18 June 2019 | None | | | |
| WO | 2021093240 | A1 | 20 May 2021 | US | 10859684 | B1 | 08 December 2020 |

Form PCT/ISA/210 (patent family annex) (January 2015)